# EUROPÄISCHE PATENTANMELDUNG

(11) **EP 2 610 549 A2**
(43) Veröffentlichungstag der Anmeldung: **03.07.2013**
(21) Anmeldenummer: 12195196.6
(22) Anmeldetag: 03.12.2012
(51) Int. Cl.: F21S 8/12, F21V 7/00

(54) **Scheinwerfer für ein Kraftfahrzeug, der eine Teilfernlicht-Lichtverteilung mit Hilfe eines Reflexionssystems erzeugt**

(30) Priorität: 30.12.2011 DE 102011090181
(71) Anmelder: Automotive Lighting Reutlingen GmbH, 72762 Reutlingen (DE)
(72) Erfinder: Scholl, Michael, 72810 Gomaringen (DE); Krahmer, Sönke, 72762 Reutlingen (DE); Stade, Florian, 44359 Dortmund (DE)
(74) Vertreter: Dreiss

(57) **Zusammenfassung**

Vorgestellt wird ein Scheinwerfer (10) für ein Kraftfahrzeug (11), mit einem Lichtmodul (12), das einen Reflektor (14) und eine Halbleiterlichtquelle (16) aufweist, die eine schmale und von mindestens einer geraden Kante an einer Schmalseite berandete Lichtaustrittsfläche aufweist und die den Reflektor beleuchtet, wobei der Reflektor dazu eingerichtet ist, auf ihn einfallendes Licht der Halbleiterlichtquelle in einem eine Hauptabstrahlrichtung aufweisenden Lichtbündel abzustrahlen und dabei eine Lichtverteilung zu erzeugen, die eine geradlinig verlaufende Hell-Dunkel-Grenze aufweist. Der Scheinwerfer zeichnet sich dadurch aus, dass die Halbleiterlichtquelle so angeordnet ist, dass die Längsseiten ihrer Lichtaustrittsfläche in der Hauptabstrahlrichtung hintereinander und/oder übereinander liegen und dabei quer zur Hauptabstrahlrichtung und quer zu der geradlinig verlaufenden Hell-Dunkel-Grenze ausgerichtet sind.

## Beschreibung

Die vorliegende Erfindung betrifft einen Scheinwerfer nach dem Oberbegriff des Anspruchs 1.

Im Unterschied zu einer Signalfunktionen erfüllenden Leuchte wird hier unter einem Scheinwerfer eine Beleuchtungseinrichtung verstanden, die zur Beleuchtung der Fahrbahn vor dem Kraftfahrzeug dient, so dass der Fahrer in seinem Fahrweg liegende Hindernisse rechtzeitig erkennen kann.

Ein solcher Scheinwerfer für eine Kraftfahrzeug ist dazu eingerichtet, eine Teilfernlicht-Lichtverteilung mit einem Reflexionssystem zu erzeugen und weist einen Reflektor und eine Halbleiterlichtquelle auf, die eine schmale und von mindestens einer geraden Kante an einer Schmalseite berandete Lichtaustrittsfläche besitzt und die den Reflektor beleuchtet. Der Reflektor ist dazu eingerichtet, auf ihn einfallendes Licht der Halbleiterlichtquelle in einem eine Hauptabstrahlrichtung aufweisenden Lichtbündel in eine Lichtverteilung zu richten.

Ein solcher Scheinwerfer ist aus der DE 10 2009 037 559 A1 bekannt. Unter einer Teilfernlicht-Lichtverteilung wird in diesem Zusammenhang eine Lichtverteilung mit einer zumindest teilweise vertikal, also quer zum Horizont verlaufenden Hell-Dunkel-Grenze verstanden. Eine solche Teilfernlicht-Lichtverteilung soll im Fahrbetrieb des Kraftfahrzeugs eine hohe Reichweite der Lichtverteilung ermöglichen, ohne dabei andere Verkehrsteilnehmer, insbesondere den Gegenverkehr, zu blenden. Bei lange Zeit üblichen Scheinwerfern wurde eine Blendung des Gegenverkehrs durch den Betrieb des Scheinwerfers mit einer Abblendlichtverteilung vermieden.

Eine Abblendlichtverteilung zeichnet sich dadurch aus, dass sie eine im wesentlichen horizontale Hell-Dunkel-Grenze aufweist, die zumindest in dem Bereich der Lichtverteilung, in dem der Gegenverkehr geblendet werden könnte, horizontal verläuft und dabei so tief liegt, dass der Gegenverkehr nicht geblendet wird. Dies geht natürlich zu Lasten der Reichweite. Auf der eigenen Fahrbahnseite wurde eine etwas größere Reichweite dadurch erzielt, dass dort ein sanft ansteigender Verlauf der Hell-Dunkel-Grenze zulässig ist. Eine solche Hell-Dunkel-Grenze weist jedoch eine über ihre ganze Breite verlaufende Hell-Dunkel-Grenze auf, so dass die Reichweite dieser Lichtverteilung über ihre ganze Breite entsprechend beschränkt ist.

In Bezug auf einen bestimmungsgemäß ausgerichteten Scheinwerfer unterscheidet sich eine Teilfernlicht-Lichtverteilung von einer solchen herkömmlichen Abblendlicht-Lichtverteilung dadurch, dass die Reichweite der Teilfernlicht-Lichtverteilung über einen Teil der Breite dieser Lichtverteilung nicht beschränkt ist und insbesondere eine vertikal und damit quer zum Horizont und zur Hauptabstrahlrichtung des Scheinwerfers verlaufende Hell-Dunkel-Grenze aufweist.

Zur Erzeugung von Lichtverteilungen werden in modernen Kraftfahrzeugscheinwerfern sowohl Projektionssysteme als auch Reflexionssysteme eingesetzt. Bei Projektionssystemen wird Licht einer Lichtquelle von einem Reflektor in ein eng begrenztes Volumen innerhalb des Scheinwerfers gebündelt. Die in dem Volumen resultierende Verteilung des Lichtes wird von einer Projektionslinse, die auf das eng begrenzte Volumen fokussiert ist, in das Vorfeld vor dem Scheinwerfer projiziert. Da die innere Lichtverteilung dadurch in eine äußere Lichtverteilung abgebildet wird, kann letztere zum Beispiel durch eine Blende, die den von dem eng begrenzten Volumen in Richtung zur Projektionslinse ausgehenden Lichtstrom beschneidet, geformt werden. Eine durch das eng begrenzte Volumen verlaufende Blendenkante wird zum Beispiel als Hell-Dunkel-Grenze abgebildet.

Bei Reflexionssystemen wird eine Lichtverteilung ohne eine solche Projektion erzeugt. In diesem Zusammenhang ist es bekannt, Reflektoren zu verwenden, die so geformt sind, dass sie von einer zugehörigen Lichtquelle aus einfallendes Licht so in bestimmte Vorzugsrichtungen reflektieren, das sich ebenfalls Lichtverteilungen mit Hell-Dunkel-Grenzen erzeugen lassen.

Die eingangs genannte DE 10 2009 037 559 A1 offenbart sowohl Projektionssysteme als auch Reflexionssysteme zur Erzeugung von Teilfernlicht-Lichtverteilungen, wobei als Lichtquellen Halbleiterlichtquellen, insbesondere weißes Licht emittierende Leuchtdioden verwendet werden. Die Halbleiterlichtquelle ist dort zum Beispiel als Reihe von vier Leuchtdioden verwirklicht, wobei jede eine etwa quadratische und ebene Lichtaustrittsfläche von etwa 1 mm Kantenlänge besitzt und die Kante an Kante in einer Reihe angeordnet sind. Die Reihe ist in ihrer Längsrichtung parallel zur Hauptstrahlrichtung angeordnet, mit der das Licht den Reflektor verlässt. Diese Richtung entspricht der optischen Achse des Reflektors. Die beschriebene Ausrichtung der Reihe von Leuchtdioden ergibt eine längliche leuchtende Fläche die hinsichtlich ihrer Ausrichtung mit einer sogenannten Axialwendel-Anordnung einer Glühlampe in einem vergleichbaren Reflektor vergleichbar ist.

Von diesem Stand der Technik unterscheidet sich die vorliegende Erfindung dadurch, dass die Halbleiterlichtquelle so angeordnet ist, dass die Längsseiten ihrer Lichtaustrittsfläche in der Hauptabstrahlrichtung hintereinander oder übereinander liegen und dabei quer zur Hauptabstrahlrichtung und quer zu der geradlinig verlaufenden Hell-Dunkel-Grenze ausgerichtet sind.

Dadurch werden die folgenden Vorteile erzielt:
Durch die orthogonale Anordnung entsteht ein Lichtbündel mit einer geringen Höhe. Dies ist für ein Zusammenwirken mit einem zweiten Scheinwerfer oder Lichtmodul in einem Teilfernlichtbetrieb erwünscht. Die geringe Höhe ist deshalb ausreichend, weil das Lichtbündel gemeinsam mit einem weiteren Lichtbündel verwendet wird, das eine Grundlichtverteilung oder Abblendlichtverteilung erzeugt, die den Gegenverkehr nicht blendet. Eine solche Lichtverteilung weist eine Hell-Dunkel-Grenze auf, die gesetzeskonform höchstens geringfügig über den Horizont vor dem Fahrzeug ansteigt und damit oberhalb der Hell-Dunkel-Grenze eine gewisse Asymmetrie besitzen darf. Der unter dieser Hell-Dunkel-Grenze liegende Bereich wird dabei sowohl nach rechts als auch nach links ausgeleuchtet.

Das Lichtbündel geringer Höhe wird einer solchen Lichtverteilung überlagert. Die Überlagerung erfolgt dabei so, dass das Lichtbündel geringer Höhe einen Bereich an und/oder oberhalb der Hell-Dunkel-Grenze des breiten Grundlicht- oder Abblendlicht-Lichtverteilung ausleuchtet. Die Hell-Dunkel-Grenze der durch das Lichtbündel geringer Höhe erzeugten Lichtverteilung liegt dabei außermittig, also gegenüber dem H-V-Punkt eines üblichen Messschirms für Lichtverteilungen nach rechts oder links verschoben auf der unteren Lichtverteilung, so dass sich eine Teil-Fernlicht-Lichtverteilung ergibt, bei der entweder die rechte oder die linke Seite langreichweitig ausgeleuchtet wird.

Bei Rechtsverkehr wird zum Beispiel in einer Situation nur mit Gegenverkehr nur der rechte Bereich weit ausgeleuchtet, um den Gegenverkehr nicht zu blenden und trotzdem eine langreichweitige Beleuchtung zu erzielen. In einer Situation nur mit vorausfahrendem Verkehr auf der eigenen Seite wird zum Beispiel nur die linke Seite langreichweitig ausgeleuchtet. Dazu reicht jeweils eine geringe Höhe oberhalb der Grundlicht- oder Abblendlicht- Lichtverteilung aus.

Eine Ausgestaltung zeichnet sich dadurch aus, dass der Scheinwerfer ein weiteres Lichtmodul aufweist, das eine Lichtverteilung mit einer Hell-Dunkel-Grenze erzeugt, die zur geradlinig verlaufenden Hell-Dunkel-Grenze der Lichtverteilung des Lichtmoduls nach Anspruch 1 oder 2 zumindest teilweise rechtwinklig oder annähernd rechtwinklig verläuft.

Bevorzugt ist auch, dass die Hell-Dunkel-Grenze des weiteren Lichtmoduls bei einer bestimmungsgemäßen Verwendung zumindest teilweise horizontal verläuft.

Ferner ist bevorzugt, dass das weitere Lichtmodul ebenfalls eine Halbleiterlichtquelle aufweist.

Bevorzugt ist auch, dass das weitere Lichtmodul eine Abblendlicht-Lichtverteilung oder eine Grundlicht-Lichtverteilung erzeugt.

Ferner ist bevorzugt, dass das Lichtmodul allein oder zusammen mit wenigstens einem gegebenenfalls vorhandenen weiteren Lichtmodul des Scheinwerfers bei seiner bestimmungsgemäßen Verwendung nach rechts und/oder nach links schwenkbar ist.

Eine weitere bevorzugte Ausgestaltung sieht vor, dass einzelne Einzelemitter oder auch alle Einzelemitter der Halbleiterlichtquelle einzeln ansteuerbar sind, also individuell dimmbar oder individuell einschaltbar und individuell ausschaltbar sind.

Diese Ausgestaltung ermöglicht ein schwenkbares Teilfernlichtbündel, das ohne mechanische Antriebe funktioniert. Die Steuerung erfolgt dabei bevorzugt so, wie es für das mechanisch schwenkbare Teilfernlicht beschrieben worden ist in Abhängigkeit von den dort genannten Eingangsgrößen, also zum Beispiel in Abhängigkeit von einem Lenkwinkel und oder in Abhängigkeit von den Signalen eines Fahrzeugumfeldüberwachungssystems, so dass eine Blendung anderer Verkehrsteilnehmer vermieden wird und/oder das Teilfernlichtbündel einem Kurvenverlauf folgt.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Dabei zeigen, jeweils in schematischer Form:
- Fig. 1: ein erstes Ausführungsbeispiel der Erfindung;
- Fig. 2: Figur 2 eine Teilfernlicht-Lichtverteilung für einen Linkseinbau-Scheinwerfer;
- Fig. 3: ein erstes Lichtmodul, das Merkmale der Erfindung aufweist und in Verbindung mit der Fig. 1 ein Ausführungsbeispiel der Erfindung repräsentiert;
- Fig. 4: eine Lichtverteilung, die mit einer Anordnung gemäß der Fig. 3 erzielt wird;
- Fig. 5: zum Vergleich eine Lichtverteilung, wie sie bei einem nicht erfindungsgemäßen Reflexionssystem mit einer Axialwendel erzielt; und
- Fig. 6: ein weiteres Ausführungsbeispiel der Erfindung.

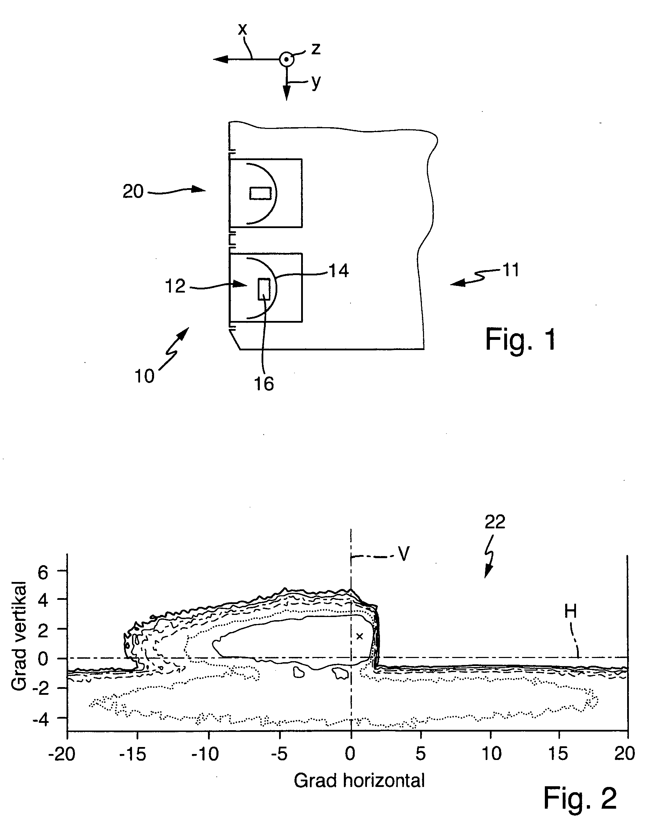

Figur 1 zeigt im Einzelnen einen Scheinwerfer 10 für ein Kraftfahrzeug 11, mit einem ersten Lichtmodul 12, das einen Reflektor 14 und eine Halbleiterlichtquelle 16 aufweist und insofern ein Reflexionssystem repräsentiert. Reine Reflexionssysteme besitzen eine höhere Effizienz als Projektionssysteme, bei denen zunächst eine innere Lichtverteilung innerhalb des Lichtmoduls erzeugt wird, die dann, ggf. nach einer Abschattung durch eine Blende, durch eine Projektionslinse vor das Fahrzeug projiziert wird. Die Effizienzeinbußen ergeben sich dabei durch die unvermeidliche Absorption in der brechenden Linse und ggf. durch die Abschattung mit Hilfe einer Blende. Reflexionssysteme haben ferner einen einfacheren Aufbau als Projektionssysteme und sind damit auch kostengünstiger.

Die Hauptabstrahlrichtung des Scheinwerfers 10 ist dabei ungefähr parallel zu der angegebenen x-Richtung eines rechtshändigen Koordinatensystems, das der Anordnung aus Halbleiterlichtquelle 16 und Reflektor 14 zugeordnet ist und daher mit dem ersten Lichtmodul 12 verbunden ist. Bei einer bestimmungsgemäßen Verwendung des Scheinwerfers 10 in dem Kraftfahrzeug 11 entspricht die x-Richtung bei einer Geradeaus-Fahrtrichtung des Kraftfahrzeugs 11 im Wesentlichen der Richtung der Längsachse des Kraftfahrzeugs 11. Die anderen beiden Raumrichtungen werden dann durch die y-Richtung und die z-Richtung gegeben. Die y-Richtung liegt dann parallel zur Querachse und die z-Richtung liegt parallel zur Hochachse des Kraftfahrzeugs. Die x-Richtung kann aber zum Beispiel von der Richtung der Längsachse abweichen, wenn es sich um ein nach rechts und/oder links schwenkbares erstes Lichtmodul oder einen entsprechend schwenkbaren Scheinwerfer handelt.

Unter der Voraussetzung einer ebenen Fahrbahn ist die y-Richtung dann parallel zu einer Horizontalen H eines mit der Fahrbahn verbundenen Koordinatensystems, während die z-Richtung dann parallel zu einer Vertikalen V eines solchen Koordinatensystems ist

Dieser Scheinwerfer 10 repräsentiert ein erstes Ausführungsbeispiel der Erfindung. Das erste Lichtmodul 12 erzeugt eine erste Lichtverteilung.

Fig. 1 zeigt darüber hinaus einen zweiten Scheinwerfer 18 für das Kraftfahrzeug mit einem zweiten Lichtmodul 20. Dabei kann es sich um ein Reflexionssystem oder um ein Projektionssystem handeln. Die Lichtquelle kann eine Halbleiterlichtquelle oder eine Glühlampe oder eine Gasentladungslampe sein, deren Licht emittierender Bereich wie eine Axialwendel (also parallel zur x-Achse) oder wie eine Querwendel angeordnet ist. Das zweite Lichtmodul 20 ist dazu eingerichtet, eine zweite Lichtverteilung zu erzeugen. Die zweite Lichtverteilung ist so beschaffen, dass eine Überlagerung der ersten Lichtverteilung und der zweiten Lichtverteilung eine Teilfernlichtverteilung ergibt. In einer Ausgestaltung weist das zweite Modul mehrere Lichtquellen, insbesondere eine Kombination von verschiedenen Lichtquellen auf.

Eine Teilfernlicht-Lichtverteilung besteht aus einer Fernlicht-Lichtverteilung oder einer Fernlicht-Spot-Verteilung, die eine oberhalb des Horizonts vertikal oder annähernd vertikal verlaufende Hell-Dunkel-Grenze aufweist. In einer Ausgestaltung besteht eine Teilfernlicht-Lichtverteilung aus einer Fernlicht-Lichtverteilung, bei der, sofern sie von einem Linkseinbau-Scheinwerfer, also einem linken Frontscheinwerfer erzeugt wird, ein Sektor dunkel ist, der ungefähr oberhalb des Horizonts sowie annähernd rechts von einer vertikal verlaufenden imaginären Linie liegt, die den Strahlquerschnitt etwa in seiner Mitte teilt. Für den Rechtseinbau-Scheinwerfer wird der dunkle Bereich ungefähr oberhalb des Horizonts sowie näherungsweise links von einer solchen Vertikalen liegen. Teilfernlicht-Lichtverteilungen zeichnen sich also durch oberhalb des Horizontes vertikal verlaufende Hell-Dunkel-Grenzen aus.

Figur 2 zeigt eine solche Teilfernlicht-Lichtverteilung 22 für einen Linkseinbau-Scheinwerfer. Diese Lichtverteilung entsteht durch einen gleichzeitigen Betrieb des ersten Scheinwerfers und des zweiten Scheinwerfers, wobei der erste Scheinwerfer, beziehungsweise dessen Lichtmodul, insbesondere den oberhalb der Horizontalen H liegenden Teil der Teilfernlicht-Lichtverteilung erzeugt, während der unterhalb der Horizontalen H liegende Teil der Teilfernlicht-Lichtverteilung von dem zweiten Scheinwerfer, beziehungsweise von dessen Lichtmodul erzeugt wird.

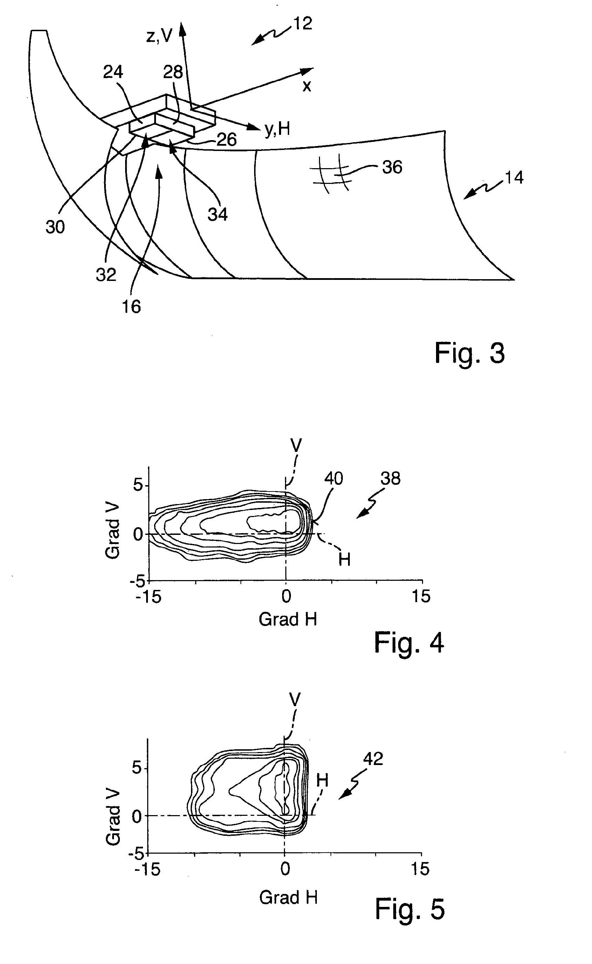

Figur 3 zeigt ein erstes Lichtmodul 12, das Merkmale der Erfindung aufweist und daher in Verbindung mit z.B. der Fig. 1 ein Ausführungsbeispiel der Erfindung repräsentiert. Das Lichtmodul 12 weist insbesondere den Reflektor 14 und die Halbleiterlichtquelle 16 auf. Die Halbleiterlichtquelle 16 ist auf einem Schaltungsträger in einem ausgezeichneten Punkt des Reflektors, zum Beispiel einem Brennpunkt des Reflektors angeordnet. Der Schaltungsträger ist mit einem nicht dargestellten Kühlkörper thermisch gekoppelt.

Die Halbleiterlichtquelle 16 besitzt eine rechteckige, von zwei Schmalseiten 24, 26 und zwei Längsseiten 28, 30 berandete Lichtaustrittsfläche und ist im Lichtmodul 12 so angeordnet, dass sie den Reflektor 14 beleuchtet. In der dargestellten Ausgestaltung weist die Halbleiterlichtquelle 16 zwei Einzelemitter 32, 34 auf, wobei jeder Einzelemitter in einer Ausgestaltung eine LED (light emitting diode)oder eine Laserdiode ist. Es handelt sich daher um ein Beispiel einer schmalen Halbleiterlichtquelle mit mindestens einer geraden Kante an einer Stirnseite, wobei die Stirnseite durch eine der beiden Schmalseiten 24, 26 gebildet wird.

In anderen Ausgestaltungen werden für eine Halbleiterlichtquelle 16 mehr als zwei Einzelemitter verwendet, also zum Beispiel n Einzelemitter, wobei n größer oder gleich zwei ist. Die Einzelemitter sind dabei jeweils bevorzugt so angeordnet, dass sich insgesamt eine rechteckige Lichtaustrittsfläche der Halbleiterlichtquelle 16 ergibt. Es können zum Beispiel zwei oder mehr in einer Reihe angeordnete Einzelemitter oder auch zwei oder mehr Reihen von Einzelemittern sein, die insgesamt wieder eine rechteckige Lichtaustrittsfläche bilden. Die Halbleiterlichtquelle kann zum Beispiel m Reihen aus je n Einzelemittern aufweisen, wenn sich nur insgesamt eine rechteckige Lichtaustrittsfläche mit der beanspruchten Lage der Längsseiten 28, 30 und der Schmalseiten 24, 26 ergibt. Die Einzelemitter sind bevorzugt mit minimalem Abstand voneinander angeordnet.

Jeder Einzelemitter 32, 34 besitzt bevorzugt eine quadratische Lichtaustrittsfläche mit einer Kantenlänge von 0,3 bis etwa 2 mm, insbesondere mit einer Kantenlänge von einem mm. LEDs als Einzelemitter mit diesen Abmessungen sind für Kraftfahrzeuganwendungen auf dem Markt erhältlich.

Der Reflektor 14 ist dazu eingerichtet, auf ihn einfallendes Licht der Halbleiterlichtquelle 16 in einem eine Hauptabstrahlrichtung aufweisenden Lichtbündel abzustrahlen und dabei eine Lichtverteilung zu erzeugen, die eine geradlinig verlaufende Hell-Dunkel-Grenze aufweist.

Jeder Punkt der beleuchteten Reflektorfläche bildet die Lichtaustrittsfläche der Halbleiterlichtquelle 16 in der insgesamt vom Reflektor erzeugten Lichtverteilung ab. Bei Glühlampen, deren Lichtaustrittsfläche letztlich durch ihre glühenden Wendeln definiert ist, spricht man in diesem Zusammenhang auch von Wendelbildern. Die Größe eines Wendelbildes in der resultierenden Lichtverteilung, der Ort des Wendelbildes in der resultierenden Lichtverteilung und die Orientierung des Wendelbildes in der resultierenden Lichtverteilung hängen vom Abstand und der Winkellage des Reflektorpunktes relativ zur Wendel ab. Allgemein hat man es mit Lichtquellen an Stelle von Wendeln und Lichtquellenbildern an Stelle von Wendelbildern zu tun.

Bei einer axial längs der optischen Achse des Reflektor ausgerichteten Lichtquellen bilden Reflektorpunkte, die auf einem Vertikalschnitt des Reflektors liegen, der durch die Lichtquelle geht, die Lichtquelle vertikal stehend ab. Reflektorpunkte, die auf einem Horizontalschnitt des Reflektors liegen, der durch die Lichtquelle hindurchgeht, bilden die Lichtquelle horizontal liegend in der Lichtverteilung ab.

Die resultierende Lichtverteilung setzt sich letztlich aus sämtlichen Lichtquellenbildern zusammen. Bei sogenannten Freiformreflektoren wird eine beispielsweise von ellipsoiden oder paraboloiden Grundformen abweichende Form der Reflektorfläche so bestimmt, dass Lichtquellenbilder gezielt in bestimmte Bereiche einer gewünschten Lichtverteilung reflektiert werden.

Die Anordnung der Halbleiterlichtquelle 16 in dem Reflektor 14 kann man in Analogie zur Anordnung einer Glühwendel einer Glühlampe in einem Reflektor betrachten. Die beanspruchte Anordnung ist in diesem Fall der Anordnung eines Glühfadens als Querwendel vergleichbar.

Im Gegensatz zu Reflektorsystemen mit Querwendel, bei der ein großer Teil des Lichtes unfokussiert in die Fahrtrichtung abgestrahlt wird, hat das erfindungsgemäße System den Vorteil, dass auf Grund des günstigeren Abstrahlverhaltens der Halbleiterlichtquelle auch mit einer quer eingebauten Lichtquelle effiziente Systeme aufgebaut werden können.

Halbleiterlichtquellen strahlen in den Halbraum ab. Durch die beanspruchte Anordnung, bei der die Halbleiterlichtquelle den Reflektor beleuchtet, wird eine unfokussierte Abstrahlung, wie sie bei einer quer liegenden Glühwendel auftreten würde, vermieden.

Eine bevorzugte Ausgestaltung zeichnet sich dadurch aus, dass der Reflektor 14 eine Aufteilung der Reflektorfläche auf eine Vielzahl von Facetten 36 aufweist, wobei jede Facette 36, die dann wie ein einzelner Spiegel wirkt, so ausgerichtet ist, dass sie Licht in eine durch die Lage und Ausrichtung der Facette im Raum relativ zu der Lichtquelle vorbestimmte Richtung reflektiert. Dabei ist insbesondere bevorzugt, dass die Facetten so ausgestaltet sind, dass sich eine Lichtverteilung mit einer geradlinig verlaufenden Hell-Dunkel-Grenze ergibt, insbesondere einer Hell-Dunkel-grenze, die bei einer bestimmungsgemäßen Verwendung des Lichtmoduls, respektive des Scheinwerfers, vertikal verläuft.

Auf diese Weise können sogar ohne Blenden, wie sie bei Projektionssystemen zur Erzeugung scharfer Hell-Dunkel-Grenzen verwendet werden, Lichtverteilungen mit scharfen Hell-Dunkelgrenzen erzeugt werden. Gleichwohl sind der Freiheit der Erzeugung von Lichtverteilungen Grenzen gesetzt. So erzeugen weiter von einer optischen Achse des Reflektors entfernt liegende Punkte kleinere aber hellere Bilder der Wendel als näher an der optischen Achse liegende Punkte des Reflektors. Daraus ergeben sich zum Beispiel Forderungen an die Mindestabmessungen der Reflektoren von Reflexionssystemen.

Das in der Figur 3 dargestellte Lichtmodul 12 zeichnet sich dadurch aus, dass es eine geradlinig verlaufende Hell-Dunkel-Grenze erzeugt. Die geradlinig verlaufende Hell-Dunkel-Grenze ist insbesondere eine bei einer bestimmungsgemäßen Verwendung des Lichtmoduls 12 vertikal verlaufende Hell-Dunkel-Grenze. Das Lichtmodul 12 zeichnet sich ferner dadurch aus, dass die Halbleiterlichtquelle 16 so angeordnet ist, dass die Längsseiten 28, 30 ihrer Lichtaustrittsfläche in der Hauptabstrahlrichtung x des Reflektors 14 hintereinander und/oder übereinander liegen und dabei quer zur Hauptabstrahlrichtung x und quer zu der geradlinig verlaufenden Hell-Dunkel-Grenze ausgerichtet sind, die von dem Lichtmodul 12 erzeugt wird.

Figur 4 zeigt eine Lichtverteilung, die mit einer solchen Anordnung erzielt wird. Figur 4 zeigt insbesondere eine Lichtverteilung 38, die eine geradlinig verlaufende Hell-Dunkel-Grenze 40 aufweist. Eine solche Lichtverteilung ergibt sich zum Beispiel auf einem Messschirm, der sich in dem vom Lichtmodul nach Fig. 3 abgestrahlten Lichtbündel befindet und dessen Flächennormale der Hauptabstrahlrichtung x entgegengesetzt gerichtet ist.

Die geschlossenen Kurven in der Lichtverteilung 38 in der Figur 4 entsprechen dabei jeweils Linien gleicher Lichtintensität, also gleicher Helligkeit. Das heißt nicht, dass die Helligkeit von Linie zu Linie konstant ist, sondern dass sie längs eines geschlossenen Kurvenzuges konstant ist. Solche Linien werden im Folgenden auch als Isolux-Linien bezeichnet. Von Isolux-Linie zu Isolux-Linie nimmt die Lichtintensität von innen nach außen ab. Die Dichte der Isolux-Linien längs einer Richtung ist daher ein Maß für den Helligkeitsgradienten längs dieser Richtung.

Die in der Fig. 4 dargestellte Lichtverteilung 38 zeichnet sich insbesondere dadurch aus, dass ihre Höhe in Richtung der Vertikalen V kleiner ist als ihre Breite in Richtung der Horizontalen H. Die Horizontale H ist bei einer bestimmungsgemäßen Verwendung der Erfindung eine imaginäre auf der Höhe des Horizonts vor dem Fahrzeug liegende horizontale Linie. Die Vertikale V verläuft senkrecht dazu und zur Fahrzeuglängsachse. Der Kreuzungspunkt der Horizontalen H und der Vertikalen V wird auch als H-V-Punkt bezeichnet.

Die in der Fig. 4 dargestellte Lichtverteilung 38 zeichnet sich ferner dadurch aus, dass die Isolux-Linien auf einer Seite der Vertikalen V in einem Teilbereich des äußeren Randes der Lichtverteilung geradlinig oder zumindest nahezu geradlinig verlaufen und dabei vergleichsweise sehr dicht nebeneinander liegen. Dieser Teilbereich ist der in der Fig. 4 rechts neben der Vertikalen V liegende Bereich, in dem die Isoluxlinien nahezu parallel zu der Vertikalen V verlaufen. Unter einer Hell-Dunkel-Grenze 40 wird ein solcher Bereich dicht liegender Isoluxlinien, also ein Bereich mit einem vergleichsweise steilen Helligkeitsgradienten verstanden.

Die Fig. 4 zeigt in diesem Sinne eine Lichtverteilung 38, die rechts von einer Hell-Dunkel-Grenze 40 begrenzt wird, während die Helligkeit auf ihrer linken Seite allmählich abnimmt, so dass sich dort jeweils ein allmählicher Übergang, aber keine (scharfe) Hell-Dunkel-Grenze einstellt. Die Fig. 4 zeigt insbesondere eine Lichtverteilung 38, die eine geradlinig, insbesondere vertikal verlaufende Hell-Dunkel-Grenze 40 aufweist.

Um die Vorteile der Erfindung zu verdeutlichen, wird im Folgenden noch einmal auf den Stand der Technik eingegangen. Bei dem aus der DE 10 2009 037 559 A1 bekannten Gegenstand wird eine ähnliche Lichtverteilung mit einer Baugruppe erzeugt, die einen Reflektor und eine Halbleiterlichtquelle aufweist, die eine rechteckige, von zwei Schmalseiten und zwei Längsseiten berandete Lichtaustrittsfläche besitzt und die den Reflektor beleuchtet, wobei der Reflektor dazu eingerichtet ist, auf ihn einfallendes Licht der Halbleiterlichtquelle in einem eine Hauptabstrahlrichtung aufweisenden Lichtbündel abzustrahlen.

Bei dem bekannten Gegenstand ist die Halbleiterlichtquelle so angeordnet, dass sie den Reflektor beleuchtet und dass das von der Halbleiterlichtquelle auf den Reflektor einfallende Licht von dem Reflektor in einem Lichtbündel abgestrahlt wird, das eine Hauptabstrahlrichtung aufweist. Die Halbleiterlichtquelle weist bei dem bekannten Gegenstand vier LEDs auf. Jede LED weist für sich eine quadratische Lichtaustrittsfläche mit einer Kantenlänge von einem mm auf. Die LEDs sind in einer Reihe aneinander angrenzend so angeordnet, dass sich insgesamt eine rechteckige Lichtaustrittsfläche ergibt. Die Länge der Lichtaustrittsfläche ist entsprechend viermal so groß wie ihre Breite. In Bezug auf die Hauptabstrahlrichtung ist die Halbleiterlichtquelle so angeordnet, dass die Längsseiten der rechteckigen Lichtaustrittsfläche parallel zu der Hauptabstrahlrichtung und quer zu der geradlinig verlaufenden Hell-Dunkel-Grenze ausgerichtet sind.

Wie die Fig. 3 zeigt, sieht die Erfindung eine andere Anordnung der Halbleiterlichtquelle relativ zu dem Reflektor 14 vor. Die Erfindung zeichnet sich gerade dadurch aus, dass die Halbleiterlichtquelle 16 so angeordnet ist, dass die Längsseiten 28, 30 ihrer Lichtaustrittsfläche in der Hauptabstrahlrichtung x des Reflektors 14 hintereinander liegen und dabei quer zur Hauptabstrahlrichtung x und quer zu der geradlinig verlaufenden Hell-Dunkel-Grenze 40 ausgerichtet sind.

Aus diesem Unterschied ergeben sich quantitativ messbare Unterschiede in den Lichtverteilungen, die jeweils erzeugt werden. Dies wird durch einen Vergleich der Figuren 4 und 5 deutlich.

Figur 5 zeigt eine Lichtverteilung 42, wie sie bei einem Reflexionssystem mit einer Axialwendel auftritt. Im Vergleich mit der Lichtverteilung 38 des

Ausführungsbeispiels der Erfindung aus der Fig. 4 erkennt man, dass die Lichtverteilung 42 des bekannten Systems gewissermaßen in Richtung der Horizontalen H gestaucht und in Richtung der Vertikalen V gestreckt ist, was unerwünscht ist. Dies gilt insbesondere für die von den inneren Isolux-Linien begrenzten Bereiche der Lichtverteilung 42, die sogar in Richtung der Vertikalen V höher sind, als sie in Richtung der Horizontalen H breit sind. Die besonders hellen Bereiche stehen damit gewissermaßen, während sie bei der Erfindung liegen und damit eine breitere Ausleuchtung der hellen Seitenbereiche und insgesamt eine harmonischere und weicher auslaufende Abnahme der Helligkeit im erleuchteten Seitenbereich bewirken.

Damit lassen sich bei ansonsten gleichen Bedingungen, also insbesondere bei gleicher Halbleiterlichtquelle und gleicher Reflektorgröße zwar sowohl mit dem bekannten Gegenstand als auch mit dem Gegenstand der Erfindung ähnliche Lichtverteilungen erzeugen, also Lichtverteilungen mit vertikaler Hell-Dunkel-Grenze gemäß den Figuren 4 und 5.

In konkreten Anwendungsfällen ergeben sich aber für den Stand der Technik Lichtverteilungen mit einem Verhältnis ihrer horizontalen Breite zu ihrer vertikalen Höhe von 4 zu 3, also weniger als 1,5. Die erfindungsgemäße Anordnung führt dagegen unter vergleichbaren Bedingungen zu einer Lichtverteilung mit einem Verhältnis ihrer horizontalen Breite zu ihrer vertikalen Höhe von ca. 2, jedenfalls mehr als 2. Die Breite und die Höhe ergeben sich dabei jeweils zum Beispiel als Breite und Höhe von Bereichen, die von Isolux-Linien gleicher Helligkeit begrenzt werden.

Die Erfindung liefert also unter sonst gleichen Bedingungen, also insbesondere bei gleicher Lichtquelle und gleichen Reflektorabmessungen, eine weniger hohe und dafür aber breitere Lichtverteilung, die die in der Fig. 4 dargestellte charakteristische Form aufweist. Dadurch wird bei einer Teilfernlichtverteilung der langreichweitig helle Bereich der Lichtverteilung breiter ausgeleuchtet. Das ist der in der Fig. 3 oberhalb der Horizontalen liegende helle Bereich.

Im Vergleich zu der mit dem bekannten Gegenstand erzielten Teilfernlichtverteilung, die auf der horizontal vergleichsweise gestauchten und vertikal vergleichsweise gestreckten Lichtverteilung 42 basiert, ist dies ein großer Vorteil, da die Höhe der Lichtverteilung 38, wie sie sich bei der Erfindung ergibt, auf jeden Fall ausreicht, um die Reichweite des Teilfernlichtbündels gegenüber der Reichweite eines Abblendlichts und/oder eines Grundlichts ausreichend zu erhöhen und weil die Erfindung dann eine wesentlich breitere Ausleuchtung des langreichweitig hellen Bereichs 38 einer Teilfernlicht-Lichtverteilung 22 liefert.

In einer bevorzugten Ausgestaltung wird eine solche Teilfernlichtverteilung durch Überlagerung der Lichtverteilung eines Grundlichtmoduls oder eines Abblendlichtmoduls und eines erfindungsgemäßen Lichtmoduls erzeugt, so dass sich zum Beispiel eine Teilfernlicht-Lichtverteilung wie in Fig. 2 ergibt.

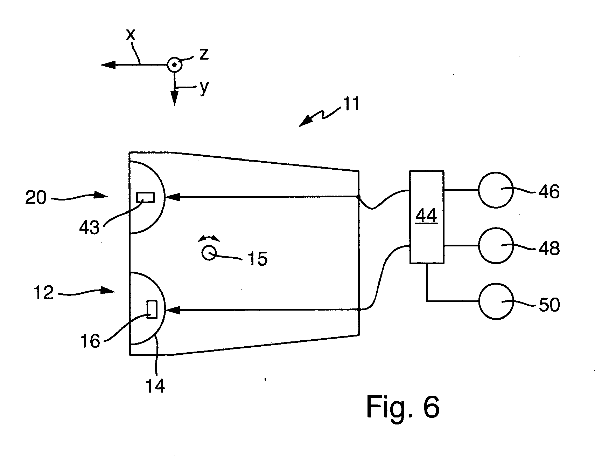

Figur 6 zeigt ein weiteres Ausführungsbeispiel der Erfindung. Bei diesem Ausführungsbeispiel ist das erste Lichtmodul 12 zusammen mit dem zweiten Lichtmodul 20 in einen beide Lichtmodule 12, 20 zusammenfassenden Lichtmodulträger 11 und damit insbesondere in ein einziges Scheinwerfergehäuse integriertet. Der dargestellte Lichtmodulträger 11 trägt das erste Lichtmodul 12, das im Folgenden auch als Teilfernlichtmodul bezeichnet wird, und das zweite Lichtmodul 20, das im Folgenden auch als Grundlichtmodul bezeichnet wird.

Das Teilfernlichtmodul 12 weist den Reflektor 14 und die Halbleiterlichtquelle 16 auf und entspricht dem Lichtmodul 12 aus der Fig. 1 und erzeugt die beschriebene Lichtverteilung 38. Das Lichtmodul 20 entspricht dem Lichtmodul 20 aus der Fig. 1 und ist in einer bevorzugten Ausgestaltung dazu eingerichtet, bei einer Lichtverteilung 22, wie sie in der Fig. 2 dargestellt ist, den unterhalb einer Horizontalen H liegenden und eine (bei bestimmungsgemäßer Verwendung) horizontal verlaufende Hell-Dunkel-Grenze aufweisenden Teil der Lichtverteilung 22 zu erzeugen.

Das Grundlichtmodul 20 weist in einer bevorzugten Ausgestaltung ebenfalls eine Halbleiterlichtquelle 43 auf. Das hat den Vorteil, dass die verschiedenen Beiträge zur Lichtverteilung von Lichtquellen gleicher Farbtemperatur erzeugt werden. Die genannten Lichtmodule können durch weitere Lichtmodule ergänzt werden.

Zur Erzeugung verschiedener Lichtverteilungen, wie z. B. Abblendlicht, Fernlicht, Stadtlicht, Regenlicht, etc. werden die Lichtverteilungen verschiedener gleichzeitig betriebener Lichtmodule überlagert. Dabei erfolgt die Steuerung durch ein Steuergerät 44, das gegebenenfalls auch eine Schwenkbewegung des Lichtmodulträgers 11 um eine vertikale Schwenkachse 15 steuert. Dazu verarbeitet das Steuergerät 44 beispielsweise die Signale eines Lenkwinkelsensors 46, einer der Steuer- und Auswerteeinrichtung 48 eines Radarsystems und eines Lichtschalters 50. Das Steuergerät 44 schaltet zum Beispiel die Lichtmodule 12 (Teilfernlicht-Lichtmodul) und 20 (Grundlicht-Lichtmodul) in Abhängigkeit vom Signal des Lichtschalters 50 einzeln oder gemeinsam an und/oder aus. In einer Ausgestaltung sind die Module gegeneinander verschenkbar. Insbesondere das Teilfernlicht-Lichtmodul ist gegenüber dem Grundlicht-Lichtmodul schwenkbar, so dass sich ein schwenkbarer Teilfernlicht-Spot ergibt.

Alternativ oder ergänzend erfolgende Steuereingriffe werden weiter unten in Verbindung mit Erläuterungen zur Funktion der Auswerte- und Steuereinrichtung 48 vorgestellt.

Die Auswerte- und Steuereinrichtung 48 verarbeitet Radarsignale, oder allgemeiner, Signale einer Sensorik, die für aus dem Fahrzeugvorfeld einfallende elektromagnetische Wellen empfindlich ist. Bei der Sensorik handelt es sich um jeweils einen oder mehrere Sensoren gleicher oder unterschiedlicher Bauart und Messweise, beispielsweise um eine Kamera oder eine Stereokamera für Licht im sichtbaren Bereich und/oder im Infrarot-Bereich, einen Infrarotsensor oder um den Empfänger eines Radarsystems des Kraftfahrzeugs.

In einer Ausgestaltung weist eine Kurvenlichtbaugruppe des Scheinwerfers den Lichtmodulträger 11 auf, der um eine vertikale Achse 15 drehbar in einem Tragrahmen gelagert ist. Wie bereits erwähnt wurde, ist dies aber nicht zwingend. Andere Ausgestaltungen sehen eine Schwenkbarkeit einzelner oder mehrerer Lichtmodule gegenüber einem starren oder ebenfalls schwenkbaren Lichtmodulträger vor. Der Tragrahmen ist seinerseits drehfest mit einer horizontal verlaufenden Achse verbunden, um eine Leuchtweiten-Regelung und/oder -Einstellung zu erlauben. Der Lichtmodulträger 11 ist damit bevorzugt kardanisch aufgehängt. Für eine Kurvenlichtfunktion wird der Lichtmodulträger in Abhängigkeit von einem Lenkwinkel von lenkbaren Rädern des Kraftfahrzeugs so gesteuert, dass die Leuchtrichtung dem Lenkwinkel der lenkbaren Räder folgt.

Bei einem Beleuchtungssystem, das die genannte Sensorik zur Überwachung des Fahrzeugvorfeldes aufweist, und das mit um eine vertikale Achse schwenkbaren Teilfernlichtmodulen ausgerüstete Frontscheinwerfer für die rechte und die linke Fahrzeugseite aufweist, ergibt sich ferner die folgende Möglichkeit, eine Blendung des Gegenverkehrs bei eingeschaltetem Teilfernlicht unter Beibehaltung einer möglichst weit in das Fahrzeugvorfeld hinausreichenden Beleuchtung zu vermeiden oder zumindest zu verringern:
Die Auswerte- und Steuereinrichtung 48 ist dabei dazu eingerichtet, ein Auftreten von Gegenverkehr zu detektieren. Dies kann durch Vergleichen erfasster Bewegungen von Objekten im Erfassungsbereich der Sensorik durch eine Bildverarbeitung oder durch Auswertung von Relativgeschwindigkeiten und Bewegungstrajektorien erfasster Objekte erfolgen.

Wenn die Auswerte- und Steuereinrichtung Gegenverkehr bei eingeschalteten Teilfernlichtmodulen detektiert, fährt sie in einer bevorzugten Ausgestaltung die Leuchtrichtungen der beiden Frontscheinwerfer nach aussen auseinander, indem sie dem jeweiligen Steuergerät des betreffenden Frontscheinwerfers entsprechende Weisungen übermittelt. Durch das Auseinanderdrehen der Leuchtrichtungen wird zwischen den Teilfernlicht-Lichtverteilungen beider Frontscheinwerfer ein vergleichsweise dunkler Bereich gebildet oder vergrössert, der dazu dient, den Gegenverkehr vor einer Blendung zu schützen. Dieser dunkle Bereich wird in einer Ausgestaltung beim Durchfahren von Kurven dem Kurvenverlauf folgend verschwenkt, so dass zum Beispiel Gegenverkehr oder ein vorausfahrendes Fahrzeug im nicht blendenden Dunkelbereich liegt bleibt.

Fährt man dann, wenn kein Gegenverkehr detektiert wird, die Teilfernlicht-Lichtverteilungen beider Frontscheinwerfer soweit zusammen, dass sich die beiden vertikalen Hell-Dunkel-Grenzen berühren oder dass die vertikale Hell-Dunkel-Grenze des einen Frontscheinwerfers bereits im hellen Bereich der Teilfernlichtverteilung des anderen Frontscheinwerfers liegt, ergibt sich eine Fernlicht-Lichtverteilung, die ein separates Fernlicht-Lichtmodul ersetzen oder ergänzen kann.

Eine weitere Ausgestaltung sieht vor, dass wenigstens ein einzelner Emitter auch mehrere oder auch alle Einzelemitter der Halbleiterlichtquelle einzeln ansteuerbar sind, also individuell dimmbar oder individuell einschaltbar und individuell ausschaltbar sind.

Diese Ausgestaltung ermöglicht ein schwenkbares Teilfernlichtbündel, das ohne mechanische Antriebe funktioniert. Die Steuerung erfolgt dabei bevorzugt so, wie es für das mechanisch schwenkbare Teilfernlicht beschrieben worden ist in Abhängigkeit von den dort genannten Eingangsgrößen, also zum Beispiel in Abhängigkeit von einem Lenkwinkel und oder in Abhängigkeit von den Signalen eines Fahrzeugumfeldüberwachungssystems, so dass eine Blendung anderer Verkehrsteilnehmer vermieden wird und/oder das Teilfernlichtbündel einem Kurvenverlauf folgt. Dazu wird jeweils bei aktivierter Teilfernlicht-Lichtfunktion diejenige LED gedimmt oder ausgeschaltet, die einen Bereich der Teilfernlicht-Lichtverteilung erzeugt, in dem sich ein anderer Verkehrsteilnehmer befindet oder der bei einer Kurvenfahrt von der Straße weggerichtet ist und daher die Aufmerksamkeit des Fahrers vom für ihn relevanten Verkehrsgeschehen ablenken könnte.

## Patentansprüche

1. Scheinwerfer (10) für ein Kraftfahrzeug (11), mit einem Lichtmodul (12), das einen Reflektor (14) und eine Halbleiterlichtquelle (16) aufweist, die eine schmale und von mindestens einer geraden Kante an einer Schmalseite berandete Lichtaustrittsfläche aufweist und die den Reflektor beleuchtet, wobei der Reflektor dazu eingerichtet ist, auf ihn einfallendes Licht der Halbleiterlichtquelle in einem eine Hauptabstrahlrichtung (x)aufweisenden Lichtbündel abzustrahlen und dabei eine Lichtverteilung (38) zu erzeugen, die eine geradlinig verlaufende Hell-Dunkel-Grenze (40) aufweist, **dadurch gekennzeichnet, dass** die Halbleiterlichtquelle so angeordnet ist, dass die Längsseiten ihrer Lichtaustrittsfläche in der Hauptabstrahlrichtung hintereinander und/oder übereinander liegen und dabei quer zur Hauptabstrahlrichtung und quer zu der geradlinig verlaufenden Hell-Dunkel-Grenze ausgerichtet sind.

2. Scheinwerfer (10) nach Anspruch 1, **dadurch gekennzeichnet, dass** die geradlinig verlaufende Hell-Dunkel-Grenze (40) bei einer bestimmungsgemäßen Verwendung des Scheinwerfers vertikal verläuft.

3. Scheinwerfer (10) nach Anspruch 1 oder 2, **dadurch gekennzeichnet, dass** er ein weiteres Lichtmodul (20)aufweist, das eine Lichtverteilung mit einer Hell-Dunkel-Grenze erzeugt, die zur geradlinig verlaufenden Hell-Dunkel-Grenze (40) der Lichtverteilung des Lichtmoduls (12)nach Anspruch 1 oder 2 zumindest teilweise rechtwinklig oder annähernd rechtwinklig verläuft.

4. Scheinwerfer (10) nach Anspruch 2 und 3, **dadurch gekennzeichnet, dass** die Hell-Dunkel-Grenze des weiteren Lichtmoduls bei einer bestimmungsgemäßen Verwendung zumindest teilweise horizontal verläuft.

5. Scheinwerfer (10) nach Anspruch 3, **dadurch gekennzeichnet, dass** das im Anspruch 3 genannte weitere Lichtmodul ebenfalls eine Halbleiterlichtquelle aufweist.

6. Scheinwerfer (10) nach einem der vorhergehenden Ansprüche, **dadurch gekennzeichnet, dass** das weitere Lichtmodul eine Abblendlicht-Lichtverteilung oder eine Grundlicht-Lichtverteilung erzeugt.

7. Scheinwerfer (10) nach einem der vorhergehenden Ansprüche, **dadurch gekennzeichnet, dass** das im Anspruch 1 genannte Lichtmodul (12) allein oder zusammen mit wenigstens einem gegebenenfalls vorhandenen weiteren Lichtmodul (20) des Scheinwerfers bei seiner bestimmungsgemäßen Verwendung nach rechts und/oder nach links schwenkbar ist.

8. Scheinwerfer (10) nach einem der vorhergehenden Ansprüche, **dadurch gekennzeichnet, dass** eine Reflexionsfläche des Reflektors (14) in Facetten (36) unterteilt ist.

9. Scheinwerfer (10) nach einem der vorhergehenden Ansprüche, **dadurch gekennzeichnet, dass** die Halbleiterlichtquelle des im Anspruch 1 genannten Lichtleitermoduls mehrere Einzelemitter (32, 34) aufweist, die relativ zueinander so angeordnet sind, dass sie insgesamt eine rechteckige Lichtaustrittsfläche ergeben.

10. Scheinwerfer (10) nach einem der vorhergehenden Ansprüche, **dadurch gekennzeichnet, dass** die Halbleiterlichtquelle des im Anspruch 1 genannten Lichtleitermoduls mehrere Einzelemitter (32, 34) aufweist, die jeweils einzeln eine quadratische Lichtaustrittsfläche mit einer Kantenlänge zwischen 0,3 mm und 2 mm aufweisen.

11. Scheinwerfer (10) nach einem der vorhergehenden Ansprüche, **dadurch gekennzeichnet, dass** die Halbleiterlichtquelle eine rechteckige, von zwei Schmalseiten (24, 26) und zwei Längsseiten (28, 30) berandete Lichtaustrittsfläche besitzt.

12. Scheinwerfer (10) nach Anspruch 9 oder 10, **dadurch gekennzeichnet, dass** die Einzelemitter individuell dimmbar oder einschaltbar und ausschaltbar sind.
